# EUROPÄISCHE PATENTSCHRIFT

(11) **EP 1 899 684 B1**
(45) Veröffentlichungstag und Bekanntmachung des Hinweises auf die Patenterteilung: **13.07.2016**
(21) Anmeldenummer: 06755154.9
(22) Anmeldetag: 11.05.2006
(51) Int. Cl.: G01F 1/60

(54) **VERFAHREN ZUR BESTIMMUNG DER MESSPERIODE EINES MAGNETISCH-INDUKTIVEN DURCHFLUSSMESSGERÄTS**
METHOD FOR DETERMINING THE MEASURING PERIOD OF A MAGNETO-INDUCTIVE FLOWMETER
PROCÉDÉ POUR DÉTERMINER LA PÉRIODE DE MESURE D'UN DÉBITMÈTRE MAGNÉTIQUE INDUCTIF

(30) Priorität: 05.07.2005 DE 102005031665
(43) Veröffentlichungstag der Anmeldung: 19.03.2008
(73) Patentinhaber: Endress+Hauser Flowtec AG, 4153 Reinach (CH)
(72) Erfinder: BUDMIGER, Thomas, CH-4107 Ettingen (CH)
(74) Vertreter: Andres, Angelika Maria
(86) Internationale Anmeldenummer: PCT/EP2006/062243
(87) Internationale Veröffentlichungsnummer: WO 2007/003461

(56) Entgegenhaltungen:
- EP-A- 0 969 268
- EP-A- 1 460 394
- PATENT ABSTRACTS OF JAPAN Bd. 1999, Nr. 13, 30. November 1999 (1999-11-30) -& JP 11 223539 A (YAMATAKE CORP), 17. August 1999 (1999-08-17)

## Beschreibung

Die Erfindung betrifft ein Verfahren zur Bestimmung des Arbeitspunktes eines magnetisch-induktiven Durchflussmessgeräts, das den Volumen- bzw. Massedurchfluss eines Mediums durch eine Rohrleitung bzw. durch ein Messrohr detektiert.

Ein magnetisch-induktives Durchflussmessgerät weist üblicherweise die folgenden Komponenten auf:
- ein Messrohr, das von einem Medium im wesentlichen in Richtung der Messrohrachse durchflossen wird;
- eine Magnetanordnung, die ein das Messrohr durchsetzendes und im wesentlichen senkrecht zur Messrohrachse verlaufendes alternieren
- des Magnetfeld erzeugt;
- zwei Messelektroden, wobei die Messelektroden im Messrohr auf einer Verbindungslinie, die im wesentlichen senkrecht zur Messrohrachse und zum Magnetfeld ausgerichtet ist, positioniert sind;
- eine Regel-/Auswerteeinheit, die anhand der an den Messelektroden abgegriffenen Messspannung den Volumen- bzw. den Massedurchfluss des Mediums durch das Messrohr bestimmt.

Magnetisch-induktive Durchflussmessgeräte nutzen für die volumetrische Strömungsmessung das Prinzip der elektrodynamischen Induktion aus: Senkrecht zu einem Magnetfeld bewegte Ladungsträger des Mediums induzieren in gleichfalls im Wesentlichen senkrecht zur Strömungsrichtung des Mediums angeordnete Messelektroden eine Spannung. Diese in die Messelektroden induzierte Messspannung ist proportional zu der über den Querschnitt des Messrohres gemittelten Strömungsgeschwindigkeit des Mediums; sie ist also proportional zum Volumenstrom. Bei bekannter Dichte des Mediums lässt sich darüber hinaus eine Aussage über den Massestrom des durch das Messrohr strömenden Mediums machen. Die Messelektroden sind üblicherweise mit dem Medium galvanisch oder kapazitiv gekoppelt.

Üblicherweise erfolgt die Steuerung des alternierenden Magnetfeldes über den Spulenstrom: Im Idealfall entspricht der Verlauf des in der Spulenanordnung fließenden Spulenstroms dem Verlauf des Magnetfelds, da die Mess- bzw. Feldfrequenz des magnetisch-induktiven Durchflussmessgeräts, also die Frequenz, mit der die Umschaltung des alternierenden Magnetfeldes erfolgt, in hohem Maße von der Induktivität der Spulenanordnung abhängig ist. Aufgrund von Fertigungstoleranzen ist die Induktivität der Spulenanordnung von Durchflussmessgerät zu Durchflussmessgerät verschieden. Darüber hinaus treten während des Umschaltvorgangs des Magnetfeldes in den Polschuhen und in den Kernen der Spulenanordnung Wirbelströme auf. Aufgrund der Wirbelströme entspricht der außerhalb der Spulenanordnung gemessene Spulenstrom nicht der Summe des in einer Spule fließenden Stroms und des durch die Wirbelströme erzeugten Stroms. Wird der außerhalb der Spulenanordnung gemessene Strom als Regelgröße verwendet, so ist folglich zwar der Strom nicht aber das Magnetfeld konstant. Die tatsächliche Anstiegszeit bis zum Erreichen des konstanten Magnetfelds, ist folglich eine mit einem relativ großen Messfehler behaftete, sensorspezifische Größe.

Die Feldfrequenz bzw. die Messfrequenz ist bei den bekannten magnetisch-induktiven Durchflussmessgeräten fest eingestellt. Sie ist so groß gewählt, dass auch für die denkbar ungünstigste Anstiegszeit die Messzeit zur Durchführung einer Messung des Volumen- oder Massestroms mit der gewünschten Messgenauigkeit hinreichend groß ist. Der Nachteil dieser Schätzlösung liegt auf der Hand: Da die Feld- bzw. Messfrequenz prinzipiell größer als eigentlich notwendig bemessen ist, ist die Anzahl der pro Zeiteinheit bereitgestellten Messwerte kleiner als bei einer optimal abgestimmten Messfrequenz. Mit dieser Einschränkung einher geht letztlich eine reduzierte Messgenauigkeit.

Der Erfindung liegt die Aufgabe zugrunde, ein Verfahren vorzuschlagen, mit dem die Messfrequenz bzw. die Umschaltfrequenz des Magnetfeldes optimiert wird.

Die Aufgabe wird dadurch gelöst, dass ein von einer Spulenanordnung erzeugtes alternierendes Magnetfeld an die Rohrleitung bzw. an das Messrohr angelegt wird, dass eine von dem jeweiligen magnetisch-induktiven Durchflussmessgerät abhängige Anstiegszeit nach Umschalten des Magnetfeldes bis zum Erreichen des zumindest näherungsweise konstanten Magnetfeldes ermittelt und abgespeichert wird, dass eine Mindest-Messzeit bei dem zumindest näherungsweise konstanten Magnetfeld für die Bereitstellung eines Durchflussmesswerts festgelegt wird, und dass die optimierte Messfrequenz aus der Summe von der sensorspezifischen Anstiegszeit und der Mindest-Messzeit bestimmt und zum Betrieb des Durchflussmessgeräts bereitgestellt, wobei der Spulenstrom, der durch die Spulenanordnung fließt, als Regelgröße für das Magnetfeld verwendet wird. Wie bereits zuvor erwähnt, ist diese Lösung aufgrund der in den Polschuhen und in den Kernen der Magnetanordnung auftretenden Wirbelströme nicht optimal. Daher schlägt eine vorteilhafte Ausführungsform des erfindungsgemäßen Verfahrens vor, dass der Spulenstrom derart gesteuert wird, dass die sensorabhängige Anstiegszeit nach Umschalten des Magnetfeldes minimiert wird.

Als besonders vorteilhaft wird es im Zusammenhang mit der vorliegenden Erfindung angesehen, wenn die sensorspezifische Anstiegszeit dadurch minimiert wird, dass beim Umschalten des Magnetfeldes für eine vorgegebene Referenz-Zeitspanne
*tᵣₑᵥ*
eine Überspannung an die Spulenanordnung angelegt wird. Insbesondere wird die Referenz-Zeitspanne
*tᵣₑᵥ*
für das Anlegen der Überspannung sukzessive so geregelt, dass mit Ablauf der sensorspezifischen Anstiegszeit der Spulenstrom bzw. das Magnetfeld zumindest näherungsweise konstant ist. Weiterhin ist vorgesehen, dass die Überspannung so bemessen wird, dass der durch die Spulenanordnung fließende Spulenstrom nach Ablauf der Referenz-Zeitspanne
*tᵣₑᵥ*
stetig gegen einen im Wesentlichen konstanten Strom-Endwert abfällt. Eine entsprechende Regelung des Spulenstroms ist übrigens aus der EP 0 969 268 A1 bekannt geworden.

Um die Anstiegszeit weiter zu optimieren, ist gemäß einer Weiterbildung des erfindungsgemäßen Verfahrens vorgesehen, dass nach Ablauf der Referenz-Zeitspanne
*t_{ref}*
für eine vorgegebene Zeitspanne
*tₛₕₒᵣₜ*
eine Gegenspannung an die Spulenanordnung anlegt wird, die so bemessen wird, dass der Einfluss der während des Umschaltvorgangs in die Spulenanordnung induzierten Wirbelströme näherungsweise kompensiert wird. Eine entsprechende Ausgestaltung ist in der EP 1 460 394 A2 beschrieben. So wird konkret vorgeschlagen, dass die elektromagnetische Spulenanordnung während der Zeitspanne
*tₛₕₒᵣₜ*
kurzgeschlossen wird. Alternativ wird die Richtung des durch die Spulenanordnung fließenden Stroms während der Zeitspanne
*tₛₕₒᵣₜ*
umgekehrt. Die Ermittlung der optimalen Zeitspanne
*tₛₕₒᵣₜ*
erfolgt bevorzugt mittels eines Trial-/Error-Verfahrens. Die während einer Umschaltphase ermittelten Messwerte werden zur Optimierung der Zeitspanne
*tₛₕₒᵣₜ*
für die nachfolgende Umschaltphase verwendet. Bevorzugt wird hierbei folgendermaßen vorgegangen: Die Regel-/Auswerteeinheit legt während eines ersten Umschaltvorgangs für eine vorgegebene Zeitspanne
*tₛₕₒᵣₜ*
eine Gegenspannung an die Spulenanordnung an; nachfolgend erfasst die Regel-/Auswerteinheit mehrere Strom-Messwerte innerhalb der vorgegebenen Zeitspanne
*t_{cont}*
; für den Fall, dass mit Ablauf der Zeitspanne
*t_{cont}*
der Strom-Endwert nicht erreicht ist, wird die Zeitspanne
*t_{cont}*
vergrößert; für den Fall, dass mit Ablauf der Zeitspanne
*t_{cont}*
der Strom-Endwert vorzeitig erreicht ist, wird die Zeitspanne
*tₛₕₒᵣₜ*
verkleinert.

Weiterhin wird vorgeschlagen, dass zu der Summe von optimierter Anstiegszeit und Mindest-Messzeit eine Pufferzeit
*t_{DELAY}*
hinzuaddiert wird. Insbesondere ist die Pufferzeit
*t_{DELAY}*
derart berechnet, dass das Umschalten des Magnetfeldes im Wesentlichen mit einem zeitlich nachfolgenden Nulldurchgang der Betriebsfrequenz des magnetisch-induktiven Durchflussmessgeräts synchronisiert erfolgt. Bei der Betriebsfrequenz handelt es sich beispielsweise um die Netzfrequenz.

Die Erfindung wird anhand der nachfolgenden Zeichnungen näher erläutert. Es zeigt:
Fig. 1: eine schematische Darstellung eines magnetisch-induktiven Durchflussmessgeräts, dessen Arbeitspunkt nach dem erfindungsgemäßen Verfahren eingestellt wird,
Fig. 2: ein Ersatzschaltbild der Spulenanordnung und
Fig. 3: ein Flussdiagramm zur Verdeutlichung des erfindungsgemäßen Verfahrens zur Einstellung eines magnetisch-induktiven Durchflussmessgeräts.

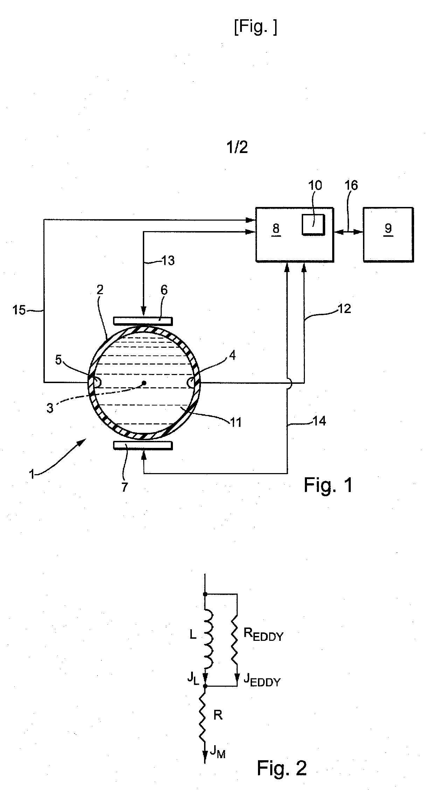

Fig. 1 zeigt eine schematische Darstellung einer Ausgestaltung eines magnetisch-induktiven Durchflussmessgeräts 1, dessen Arbeitspunkt nach dem erfindungsgemäßen Verfahren eingestellt wird. Das Messrohr 2 wird von dem Medium 11 in Richtung der Messrohrachse 3 durchflossen. Das Medium 11 ist zumindest in geringem Umfang elektrisch leitfähig. Das Messrohr 2 selbst ist aus einem nicht-leitfähigen Material gefertigt, oder es ist zumindest an seiner Innenfläche mit einem nicht-leitfähigen Material ausgekleidet.

Das senkrecht zur Strömungsrichtung des Mediums 11 ausgerichteten Magnetfeld B wird über die diametral angeordnete Spulenanordnung 6, 7 bzw. über zwei Elektromagnete erzeugt. Unter dem Einfluss der Magnetfeldes B wandern in dem Medium 11 befindliche Ladungsträger je nach Polarität zu den beiden entgegengesetzt gepolten Messelektroden 4, 5 ab. Die sich an den Messelektroden 4, 5 aufbauende Spannung ist proportional zu der über den Querschnitt des Messrohres 2 gemittelten Strömungsgeschwindigkeit des Mediums 11, d. h. sie ist ein Maß für den Volumenstrom des Mediums 11 in dem Messrohr 2. Das Messrohr 2 ist übrigens über Verbindungselemente, z. B. Flansche, die in der Zeichnung nicht gesondert dargestellt sind, mit einem Rohrsystem, durch das das Medium 11 hindurchströmt, verbunden.

Die Messelektroden 4, 5 befinden sich in direktem Kontakt mit dem Medium 11; die Kopplung kann jedoch, wie bereits an vorhergehender Stelle erwähnt, auch kapazitiv ausgestaltet sein.

Über Verbindungsleitungen 12, 13 sind die Messelektroden 4, 5 mit der Rege-/Auswerteeinheit 8 verbunden. Die Verbindung zwischen den Spulenanordnungen 6, 7 und der Regel-/Auswerteeinheit 8 erfolgt über die Verbindungsleitungen 14, 15. Die Regel-/Auswerteeinheit 8 ist über die Verbindungsleitung 16 mit einer Eingabe-/Ausgabeeinheit 9 verbunden. Der Auswerte-/Regeleinheit 8 ist die Speichereinheit 10 zugeordnet.

Bei einem idealen Magnetsystem bzw. bei einer idealen Spulenanordnung 6, 7 entspricht der Stromverlauf dem Verlauf des von der Spulenanordnung 6, 7 erzeugten Magnetfeldes B. Unter diesen Voraussetzungen lässt sich die Anstiegszeit
*ta*
zum Erreichen eines konstanten Magnetfeldes exakt berechnen. In der Realität tritt eine Abweichung um Idealfall auf: Die Spulen einer Spulenanordnung 6, 7, die bei magnetisch-induktiven Durchflussmessgeräten zum Einsatz kommen, weisen üblicherweise Spulenkerne und/oder Polschuhe auf. Die Regel-/Auswerteeinheit 8 beaufschlagt die Spulenanordnung 6, 7 so mit Strom, dass das Magnetfeld B periodisch seine Richtung ändert. Aufgrund der in den Polschuhen und Spulenkernen entstehenden Wirbelströme ist der Spulenstrom
*I_{L}*
in den beiden Halbperioden einer Umschaltung nicht betragsgleich. Vielmehr entspricht der außerhalb der Spulenanordnung 6, 7 gemessene Strom
*I_{M}*
immer dem Summenstrom
*I_{M}*
, der sich aus dem Spulenstrom
*I_{L}*
und dem Wirbelstrom
*I_{EDDY}*
zusammensetzt. Da stets der außerhalb der Spulenanordnung 6, 7 gemessene Strom
*I_{M}*
von der Regel-/Auswerteeinheit 8 als Regelgröße verwendet wird, ist zwar der Strom
*I_{M}*
konstant, nicht jedoch das Magnetfeld B, das das Messrohr 2 durchsetzt. Ein entsprechendes Ersatzschaltbild der Spulenanordnung 6, 7 ist in der Fig. 2 dargestellt.

Aus dem Stand der Technik, insbesondere wird an diesem Zusammenhang auf die EP 0 969 268 A1 und die EP 1 460 394 A2 verwiesen, sind Lösungen dafür angegeben, wie ein konstantes Magnetfeldes möglichst schnell erreicht wird. Anzumerken ist, dass sich die o.g. Referenzzeichen für die unterschiedlichen Zeitspannen direkt auf die Referenzzeichen beziehen, die in den beiden Europäischen Patentanmeldungen verwendet werden.

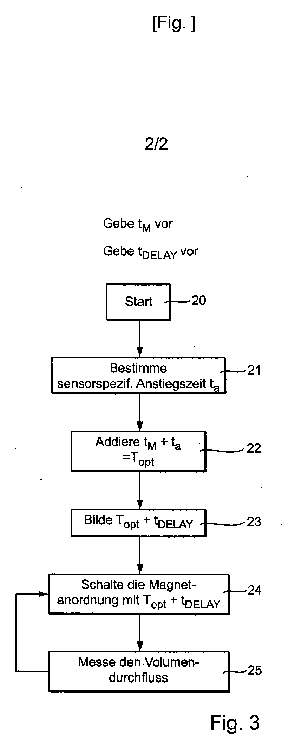

Fig. 3 zeigt ein Flussdiagramm zur Verdeutlichung des erfindungsgemäßen Verfahrens zur Einstellung eines magnetisch-induktiven Durchflussmessgeräts 1. Die gewünschte Messzeit
*t_{M}*
und die Pufferzeit
*t_{DELAY}*
werden vorgegeben, wobei beide Zeiten - die Messzeit
*t_{M}*
und die Pufferzeit
*t_{DELAY}*
- auch berechnete Variablen sein können. Insbesondere können sie mit äußeren Einflussgrößen, wie der Netzfrequenz oder der Pulsation des Durchflusses synchronisiert sein. Bei Programmpunkt 20 startet das Programm. Unter dem Programmpunkt 21 wird die sensorspezifische Anstiegszeit
*tₐ*
ermittelt. Beispielsweise erfolgt die Ermittlung der Anstiegszeit
*tₐ*
durch Messung des Spulenstroms
*I_{M}*
- eine Messung, die mit einem relativ hohen Messfehler behaftet ist -, oder sie erfolgt nach einem der zuvor bereits mehrfach beschriebenen Optimierungsverfahren, die sicherstellen sollen, dass das Magnetfeld nach einem Umschaltvorgang möglichst schnell einen konstanten Wert erreicht.

Bei Programmpunkt 22 werden die Anstiegszeit
*tₐ*
und die vorgegebene Messzeit
*t_{M}*
addiert. Anhand der Summe wird die optimale Messzeit
*tₒₚₜ*
zum Betreiben des magnetisch-induktiven Durchflussmessgeräts 1 bestimmt. Vorsorglich wird unter Programmpunkt 23 noch eine Pufferzeit
*t_{DELAY}*
zu der unter Programmpunkt 22 gebildeten Summe hinzu addiert. Aufgrund der bei Programmpunkt 23 bestimmten Messzeit wird bei Punkt 24 die Magnetanordnung 6, 7 geschaltet. Bei Punkt 25 wird nachfolgend der Volumendurchfluss des Mediums 1 durch das Messrohr 2 mit einer erhöhten Messgenauigkeit ermittelt.

### Bezugszeichenliste

- 1: magnetisch-induktives Durchflussmessgerät
- 2: Messrohr
- 3: Messrohrachse
- 4: Messelektrode
- 5: Messelektrode
- 6: Spulenahnordung
- 7: Spulenanordnung
- 8: Regel-/Auswerteeinheit
- 9: Eingabe-/Ausgabeeinheit
- 10: Speichereinheit
- 11: Medium
- 12: Verbindungsleitung
- 13: Verbindungsleitung
- 14: Verbindungsleitung
- 15: Verbindungsleitung
- 16: Verbindungsleitung

## Patentansprüche

1. Verfahren zur Bestimmung einer Messperiode eines magnetisch-induktiven Durchflussmessgeräts (1), das den Volumen- bzw. Massedurchfluss eines Mediums (11) durch eine Rohrleitung bzw. durch ein Messrohr (2) detektiert, wobei ein von einer Spulenanordnung (6, 7) erzeugtes alternierendes Magnetfeld (B) an die Rohrleitung bzw. an das Messrohr (2) angelegt wird, wobei eine von dem jeweiligen magnetisch-induktiven Durchflussmessgerät (1) abhängige Anstiegszeit (*tₐ*) nach Umschalten des Magnetfeldes (B) bis zum Erreichen des zumindest näherungsweise konstanten Magnetfeldes ermittelt und abgespeichert wird,
wobei eine Mindest-Messzeit (*t_{M}*) bei dem zumindest näherungsweise konstantem Magnetfeld für die Bereitstellung eines Durchflussmesswerts festgelegt wird, und
wobei die resultierende Messperiode (*Tₒₚₜ*) als Summe von der sensorspezifischen Anstiegszeit (*tₐ*) und der Mindest-Messzeit (*t_{M}*) bestimmt und zum Betrieb des Durchflussmessgeräts (1) bereitgestellt wird,
wobei ein Spulenstrom (*I_{M}*), der durch die Spulenanordnung (6, 7) fließt, als Regelgröße für das Magnetfeld (B) verwendet wird.

2. Verfahren nach Anspruch 1,
wobei der Spulenstrom (*I_{M}*) derart gesteuert wird, dass die sensorabhängige Anstiegszeit (*tₐ*) nach Umschalten des Magnetfeldes (B) minimiert wird.

3. Verfahren nach Anspruch 2,
wobei die sensorspezifische Anstiegszeit (*tₐ*) dadurch minimiert wird, dass beim Umschalten des Magnetfeldes (B) für eine vorgegebene Referenz-Zeitspanne (*tᵣₑᵥ*) eine Überspannung an die Spulenanordnung (6, 7) angelegt wird.

4. Verfahren nach Anspruch 3,
wobei die Referenz-Zeitspanne (*tᵣₑᵥ*) für das Anlegen der Überspannung sukzessive so geregelt wird, dass mit Ablauf der sensorspezifischen Anstiegszeit (*tₐ*) der Spulenstrom (*I_{M}*) bzw. das Magnetfeld (B) zumindest näherungsweise konstant ist.

5. Verfahren nach Anspruch 3,
wobei die Überspannung so bemessen wird, dass der durch die Spulenanordnung (6, 7) fließende Spulenstrom (*I_{M}*) nach Ablauf der Referenz-Zeitspanne (*tᵣₑᵥ*) stetig gegen einen im wesentlichen konstanten Strom-Endwert abfällt.

6. Verfahren nach Anspruch 3 oder 4,
wobei nach Ablauf der Referenz-Zeitspanne (*t_{ref}*) für eine vorgegebene Zeitspanne (*tₛₕₒᵣₜ*) eine Gegenspannung an die Spulenanordnung (6, 7) anlegt wird, die so bemessen wird, dass der Einfluss der während des Umschaltvorgangs in die Spulenanordnung (6, 7) induzierten Wirbelströme (*I_{EDDY}*) näherungsweise kompensiert wird.

7. Verfahren nach Anspruch 1,
wobei zu der Summe von optimierter Anstiegszeit (*tₐ*) und Mindest-Messzeit (*t_{M}*) eine Pufferzeit (*t_{DELAY}*) hinzuaddiert wird.

8. Verfahren nach Anspruch 7,
wobei die Pufferzeit (*t_{DELAY}*) derart berechnet wird, dass das Umschalten des Magnetfeldes (B) im wesentlichen mit einem zeitlich nachfolgenden Nulldurchgang der Betriebsfrequenz synchronisiert erfolgt.

## Claims

1. Procedure for determining a measuring period of an electromagnetic flowmeter (1), which detects the volume flow or mass flow of a medium (11) through a pipe or through a measuring tube (2),
wherein an alternating magnetic field (B) generated by a coil arrangement (6, 7) is applied to the pipe and/or the measuring tube (2),
wherein a rise time (*tₐ*) dependant on the relevant electromagnetic flowmeter (1) is determined and saved after the switching of the magnetic field (B) until the at least approximately constant magnetic field is reached,
wherein a minimum measuring time (*t_{M}*) is defined for the at least approximately constant magnetic field for the provision of a flow measured value, and wherein the resulting measuring period (*Tₒₚₜ*) is determined as the sum of the sensor-specific rise time (*tₐ*) and the minimum measuring time (*t_{M}*), and is provided for the operation of the flowmeter (1),
wherein a coil current (*I_{M}*), which flows through the coil arrangement (6, 7), is used as a controlled variable for the magnetic field (B).

2. Procedure as claimed in Claim 1,
wherein the coil current (*I_{M}*) is controlled in such a way that the sensor-dependent rise time (*tₐ*) is minimized after the switching of the magnetic field (B).

3. Procedure as claimed in Claim 2,
wherein the sensor-specific rise time (*tₐ*) is minimized in that an overvoltage is applied to the coil arrangement (6, 7) for a predefined reference time period (*t_{ref}*) when the magnetic field (B) is switched.

4. Procedure as claimed in Claim 3,
wherein the reference time period (*t_{ref}*) for the application of the overvoltage is gradually regulated in such a way that when the sensor-specific rise time (*tₐ*) elapses, the coil current (*I_{M}*) or the magnetic field (B) is at least approximately constant.

5. Procedure as claimed in Claim 3,
wherein the overvoltage is such that the coil current (*I_{M}*) flowing through the coil arrangement (6, 7) decreases continuously towards an essentially constant current end value after the reference time period (*t_{ref}*) has elapsed.

6. Procedure as claimed in Claim 3 or 4,
wherein, after the reference time period (*t_{ref}*) has elapsed, a counter-voltage is applied to the coil arrangement (6, 7) for a predefined period (*tₛₕₒᵣₜ*), said counter-voltage being such that the influence of eddy currents (*I_{EDDY}*) induced in the coil arrangement (6, 7) during the switching procedure is approximately compensated for.

7. Procedure as claimed in Claim 1,
wherein a buffer time (*t_{DELAY}*) is added to the sum of the optimized rise time (*tₐ*) and the minimum measuring time (*t_{M}*).

8. Procedure as claimed in Claim 7,
wherein the buffer time (*t_{DELAY}*) is calculated in such a way that the switching of the magnetic field (B) is essentially synchronized with a subsequent zero crossing of the operating frequency.

## Revendications

1. Procédé destiné à la détermination d'une période de mesure d'un débitmètre magnéto-inductif (1), qui détecte le débit volumique ou massique d'un produit (11) à travers une conduite ou à travers à un tube de mesure (2),
pour lequel un champ magnétique (B) alternatif généré par un dispositif à bobines (6, 7) est appliqué à la conduite ou au tube de mesure (2),
pour lequel un temps de montée (*tₐ*) dépendant du débitmètre magnéto-inductif (1) respectif est déterminé et enregistré après la commutation du champ magnétique (B) jusqu'à l'atteinte du champ magnétique au moins approximativement constant,
pour lequel un temps de mesure minimum (*t_{M}*) est défini pour la mise à disposition d'une valeur de débit lorsque le champ magnétique est au moins approximativement constant,
pour lequel la période de mesure (*Tₒₚₜ*) résultante est déterminée en tant que somme du temps de montée (*tₐ*) spécifique au capteur et du temps de mesure minimum (*t_{M}*), et mise à disposition pour le fonctionnement du débitmètre (1), pour lequel le courant de bobine (*I_{M}*), qui circule à travers le dispositif à bobines (6, 7), est utilisé en tant que grandeur de réglage pour le champ magnétique (B).

2. Procédé selon la revendication 1,
pour lequel le courant de bobine (*I_{M}*) est commandé de telle sorte que le temps de montée (*tₐ*) dépendant du capteur est minimisé après la commutation du champ magnétique (B).

3. Procédé selon la revendication 2,
pour lequel le temps de montée (*tₐ*) spécifique au capteur est minimisé par le fait que, lors de la commutation du champ magnétique (B), une surtension est appliquée au dispositif à bobines (6, 7) pendant une période de temps de référence (*t_{ref}*) prédéfinie.

4. Procédé selon la revendication 3,
pour lequel la période de temps de référence (*t_{ref}*) pour l'application de la surtension est réglée successivement de telle sorte qu'avec l'écoulement du temps de montée (*tₐ*) spécifique au capteur, le courant de bobine (*I_{M}*) ou le champ magnétique (B) est au moins approximativement constant.

5. Procédé selon la revendication 3,
pour lequel la surtension est dimensionnée de telle sorte que le courant de bobine (*I_{M}*) circulant à travers le dispositif à bobines (6, 7) décroît continuellement après l'écoulement de la période de temps de référence (*t_{ref}*) vers une valeur de courant finale pour l'essentiel constante.

6. Procédé selon la revendication 3 ou 4,
pour lequel est appliquée au dispositif à bobines (6, 7), après l'écoulement de la période de temps de référence (*t_{ref}*), une contre-tension pendant une période de temps (*tₛₕₒᵣₜ*), laquelle contre-tension est dimensionnée de telle sorte à compenser approximativement l'influence des courants de Foucault (*I_{EDDY}*) induits pendant le processus de commutation dans le dispositif à bobines (6, 7).

7. Procédé selon la revendication 1,
pour lequel un temps tampon (*t_{DELAY}*) est ajouté à la somme du temps de montée optimisé (*tₐ*) et du temps de mesure minimum (*t_{M}*).

8. Procédé selon la revendication 7,
pour lequel le temps tampon (*t_{DELAY}*) est calculé de telle sorte que la commutation du champ magnétique (B) s'effectue pour l'essentiel de façon synchronisée avec un passage par zéro subséquent de la fréquence de fonctionnement du débitmètre.
